(19) Europäisches Patentamt
European Patent Office
Office européen des brevets

(11) Veröffentlichungsnummer: **0 473 972 A1**

# (12) EUROPÄISCHE PATENTANMELDUNG

(21) Anmeldenummer: **91113489.8**

(22) Anmeldetag: **12.08.91**

(51) Int. Cl.[5]: **C08L 75/04**, D01F 6/70

(30) Priorität: **25.08.90 DE 4026884**

(43) Veröffentlichungstag der Anmeldung:
**11.03.92 Patentblatt 92/11**

(84) Benannte Vertragsstaaten:
**DE FR GB IT**

(71) Anmelder: **BAYER AG**

**W-5090 Leverkusen 1 Bayerwerk(DE)**

(72) Erfinder: **Frauendorf, Beatrix, Dr.**
**Charlottenburger Strasse 34**
**W-5090 Leverkusen 1(DE)**
Erfinder: **Lütjens, Holger, Dr.**
**Rybniker Strasse 12**
**W-5000 Köln 80(DE)**
Erfinder: **Korte, Siegfried, Dr.**
**Engstenberger Höhe 3**
**W-5068 Odenthal(DE)**

## (54) Mehrkomponenten-Elastomere auf Basis von Polyurethanharnstoffen und vernetzten, feinteiligen Kautschukpolymerisaten und ein Verfahren zu ihrer Herstellung.

(57) Die Erfindung betrifft Mehrkomponenten-Elastomere bestehend aus segmentierten Polyurethanharnstoff-Elastomeren, insbesondere Elastan-Fäden- und darin feindispergierten, teilchenförmigen, vernetzten, Kautschukpolymerisaten mit hohem Gelgehalt, sowie ein Verfahren zur Herstellung der Mehrkomponenten-Elastomere (insbesondere -Elastanfäden).

EP 0 473 972 A1

Die Erfindung betrifft Mehrkomponenten-Elastomere, bestehend aus segmentierten Polyurethanharnstoff-Elastomeren (insbesondere Elastan-Fäden)und darin feindispergierten, teilchenförmigen, vernetzten Kautschukpolymerisaten mit hohen Gelgehalten, sowie ein Verfahren zur Herstellung der Mehrkomponenten-Elastomere (insbesondere -Elastanfäden).

Elastanfasern auf Basis von segmentierten Polyurethanharnstoff-Elastomeren werden hauptsächlich zur Herstellung von hochelastischen Textilien eingesetzt. Die Haupteinsatzgebiete sind Miederwaren, Badeanzüge, Feinstrumpfhosen sowie Sportkleidung. Hierfür eingesetzte, handelsübliche Elastanfasern sind beispielsweise DORLASTAN® (BAYER AG) oder LYCRA® (DuPont).

Im allgemeinen spricht man bei segmentierten Polyurethanharnstoff-Elastomeren oder (in Form von Fäden) Polyurethanharnstoff-Elastanen, von Systemen, die neben "beweglichen" Weichsegmenten "hochschmelzende", kristalline Hartsegmente, vorzugsweise auf Harnstoff-Basis, enthalten. Tatsächlich sind die in den Hartsegmenten neben Polyurethan-Einheiten vorliegenden Polyharnstoff-Segmente aus Diisocyanaten und (cyclo)aliphatischen Diaminen, Hydrazin- oder Hydrazidverbindungen, nicht unzersetzt schmelzbar. Daher lassen sich diese segmentierten Polyurethanharnstoff-Elastomere nur aus Lösung in hochpolaren Lösungsmittel wie Dimethylformamid, Dimethylacetamid oder Dimethylsulfoxid, zu Folien oder Fäden verarbeiten. Das heißt, eine Verarbeitung bzw. eine Modifizierung mit anderen Polymerisaten ist über den Schmelzzustand (z.B. Schmelzspinnen, Extrusion oder Spritzguß) nicht möglich.

Für die meisten Anwendungen von Elastanen im Textilbereich ist eine Verbesserung der elastischen Eigenschaften (Elastizität) bei Reduzierung der bleibenden Dehnung (Restdehnung) sehr erwünscht, da dies die Eigenschaften der hochelastischen Gewebe, sowie das Tragegefühl erheblich verbessern würden. Zudem werden allgemein höhere Thermostabilitäten, insbesondere höhere Heißwasserbeständigkeit, angestrebt, da Elastane bekanntermaße bei den Textilverarbeitern durch Färbebehandlungen und Ausrüstung und später beim Textilendverbraucher z.T. drastischen Heißwasserbehandlungen ausgesetzt sind. Weiterhin zu verbessernde Eigenschaften sind beispielsweise Mikrobenbeständigkeit, Lichtbeständigkeit, Abgasechtheit, Hydrolysefestigkeiten, Stickoxidechtheiten, Quellbarkeit und Oberflächenhaftungseigenschaften sowie andere Eigenschaften.

Es besteht daher die Aufgabe, Polyurethanharnstoff-Elastane so zu modifizieren, daß bei gleichbleibendem oder verbessertem Grundeigenschaftsniveau weitere, insbesondere die obengenannten Eigenschaften, verbessert werden. Im allgemeinen wird durch ein abgestimmtes Verhältnis der Hart- und Weichsegmente in Polyurethanharnstoffen einerseits und Variation der die Hart- und Weichsegmente aufbauenden Komponenten andererseits das für den vorgesehenen Einsatzbereich erforderliche elastische Eigenschaftsprofil eingestellt. Von Nachteil ist hierbei, daß für jedes einzelne neue Polyurethanharnstoff-Elastan-System die Neuentwicklung und Optimierung der Elastomer-Herstellung und eine aufwendige Spinnverfahrensoptimierung erfolgen muß.

Erfindungsziel war es daher, leicht verfügbare bzw. handelsübliche, über den Schmelzzustand nicht verarbeitbare Polyurethanharnstoff-Elastomere, bevorzugt vom Elastan-Typ, durch Zusatz von speziellen, teilchenförmigen, vernetzten (Pfropf)Polymerisaten mit hohen Gelgehalten, die zur Modifizierung von Thermoplasten wie semikristallinen Polyamiden oder Polyestern üblicherweise eingesetzt werden, im Hinblick auf Elastizität, Restdehnung, Thermostabilität, Alterungsverhalten,

Oberflächenhaftung, Echtheiten, gegebenenfalls Anfärbbarkeit und Wasserbeständigkeit, über ein einfaches Verfahren zu verbessern.

Laut Stand der Technik sind den Polyuretharharnstoff-Elastomeren vom Elastan-Typ z.B. zur Verbesserung der Anfärbbarkeit und Abgasechtheit bereits in Dimethylformamid/Dimethylacetamid lösliche Polymerisate oder Copolymerisate zugesetzt worden, z.B. Copolymerisate des Methacrylsäureesters des N,N-Diisopropylamino-ethanols mit Decylmethacrylat (vgl. GB 1 104 127/DAS 1 669 511), doch beeinträchtigen derartige, gelöste, nicht hochelastische Polymerisate die elastische Beweglichkeit der Polyurethanharnstoff-Elastomere mit steigenden Mengen.

Es wurden auch bereits Polymere und Copolymere aus Dienen in den (Polyether)Elastanlösungen gelöst und unter Zusatz von radikalischen Startern und gegebenenfalls weiteren Coagentien, trockenversponnen, wobei vernetzte Elastomerfäden entstehen (US 3 535 415). Jedoch liegt auch hier ein homogene Verteilung vor, welche die Elastizität beeinträchtigt.

Neuerdings wurden auch bestimmte, lösliche Copolymerisate als oberflächenaktive Zusatzstoffe beansprucht, um homogene, lagerstabile Formulierungen aus miteinander an sich unverträglichen höhermolekularen Polyolen und niedermolekularen Kettenverlängerungsmitteln für die Herstellung von Polyisocyanat-Polyadditionsprodukten zu erhalten (vgl. DE-A-38 38 030 und DE-A-38 38 031).

Es wurde nun gefunden, daß teilchenförmige (feinteilige), vernetzte Kautschukpolymerisate und Kautschukpfropfpolymerisate über ein einfaches Verfahren in, über den Schmelzzustand nicht verarbeitbare, Polyurethanharnstoff-Elastomere in feindispergierter Form über Lösungen der Elastomere einarbeitbar sind

und die so über Lösung/Dispersion durch Auftrocknung oder Koagulation bzw. durch Verspinnung hergestellten Mehrkomponentenfolien bzw. -fäden verbesserte Eigenschaften, z.B. verbesserte Elastizität, Restdehnungsverhalten, Bruchdehnung, Alterungsverhalten, Thermostabilität und andere unerwartete Eigenschaftsverbesserungen zeigen. Trotz der dispergierten Kautschukteilchen ist insbesondere eine Verspinnung im Trock- oder Naßprozeß problemlos möglich.

Gegenstand der Erfindung sind somit

aus Lösung verarbeitete, nicht über den Schmelzzustand verarbeitbare Filme, Beschichtungen und insbesondere gesponnene Mehrkomponentenfäden auf Basis von segmentierten Polyurethanharnstoff-Elastomeren, enthaltend Kautschukpolymerisate und Kautschukpfropfpolymerisate aus

A) 70-99,5 Gew.-Teilen, bevorzugt 85-95 Gew.-Teilen, eines nicht über den Schmelzzustand verarbeitbaren, segmentierten Polyurethanharnstoff-Elastomers, insbesondere vom Elastan-Typ, und

B) 0,5-30 Gew.-Teilen, bevorzugt 5-15 Gew.-Teilen, eines in der Polyurethanharnstoff-Komponente dispergierten Kautschuk(co)- oder -pfropfpolymerisats, das teilchenförmig, feinteilig und vernetzt ist, sowie

C) üblichen Zusatzstoffen in der Mischung (A + B), z.B. Farbstoffen oder Pigmenten, Stabilisatoren aller Art und Verarbeitungshilfsmitteln.

Weiterhin wird ein Verfahren zur Herstellung elastischer Mehrkomponentenfäden obiger Zusammensetzung beansprucht, dadurch gekennzeichnet, daß in organischen Medien dispergierte, feinteilige und vernetzte Kautschuk(co)polymerisate oder -pfropfpolymerisate in Polyurethanharnstoff-Elastomerlösungen eingemischt und danach die Mischungen naß oder trocken versponnen werden.

A) Segmentierte Polyurethanharnstoff-Elastomere

Unter den erfindungsgemäß eingesetzten, nicht über den Schmelzzustand verarbeitbaren Polyurethanharnstoff-Elastomeren sind insbesondere Elastane zu verstehen, die zu mindestens 85 Gew.-% aus segmentierten Polyurethanharnstoff-Elastomeren bestehen. Derartige Elastomere werden üblicherweise hergestellt, indem man zunächst ein langkettiges (höhermolekulares) Diol (Makrodiol) mit einem Diisocyanat im Molverhältnis größer 1:1,4 zu einem Makrodiisocyanat (NCO-Prepolymeren) umsetzt. Das NCO-Prepolymer wird dann in einem zweiten Schritt in Lösungen von hochpolaren Lösungsmitteln wie Dimethylformamid oder Dimethylacetamid mit einem Kettenverlängerer, welcher üblicherweise aus einem (cyclo)-aliphatischen diprimären Diamin besteht, zu einem hochmolekularen Polyurethanharnstoff umgesetzt. Die besonders bevorzugten Elastan-Polymere für PU-Elastomerfäden werden vorzugsweise unter Verwendung (cyclo)aliphatischer Diamine, Hydrazin oder Dihydrazidverbindungen (unter Umsetzung mit NCO-Prepolymeren) hergestellt (vgl. hierzu Ullmann's Enzyklopädie der Technischen Chemie, 4. Auflage, Band 11, S.313-317).

Diese Polyurethanharnstoffe sind so aufgebaut, daß das Makromolekül eine Segmentstruktur aufweist, d.h. aus starren, hochschmelzenden, kristallinen und andererseits niederschmelzenden, amorphen, beweglichen Segmenten ("Hartsegmente" bzw. "Weichsegmente") besteht. Die Hartsegmente wirken dann aufgrund ihrer Kristallinität und hohen Schmelzpunkte als Fixpunkte des Netzwerks und sind damit maßgebend für die Festigkeit der aus den Elastomeren hergestellten Formkörper. Die Weichsegmente hingegen, deren Glastemperatur deutlich unterhalb der Gebrauchstemperatur liegen muß, sind für die Elastizität/Dehnbarkeit der Elastomeren maßgebend.

Die Herstellung der erfindungsgemäß eingesetzten Polyurethanharnstoff-Elastomere (Komponente A) erfolgt nach bekannten Verfahrensweisen. Besonders geeignet ist die Synthese nach dem NCO-Prepolymerverfahren, wobei das Makrodiol, vorzugsweise aus einem Polyester- und/oder Polyetherdiol im Molekulargewichtsbereich 1000 bis 4000 bestehen, in der Schmelze oder in einem Lösungsmittel, mit einem Diisocyanat zu einem NCO-Prepolymer so umgesetzt werden, daß das Reaktionsprodukt Isocyanatgruppen enthält. Die OH/NCO-Verhältnisse werden vorzugsweise zwischen 1:1,7 bis 1:2,5, vorzugsweise 1:1,80 bis 1:2,25, gewählt, wobei die Verhältnisse je nach Molekulargewicht der höhermolekularen Diole so gewählt werden, daß vorzugsweise NCO-Gehalte (berechnet auf NCO-Prepolymer-Feststoff) von 1,7 bis 3,0, insbesondere 1,8 bis 2,6 % NCO, erhalten werden. Werden Lösungsmittel bei der Prepolymerisation verwendet, so eignen sich hierfür besonders Chlorbenzol, N-Methylpyrrolidon, Dimethylsulfoxid und ganz besonders Dimethylformamid und Dimethylacetamid.

Zusammen mit den Makrodiolen können auch noch geringere Mengen kurzkettiger, tertiäre Aminogruppen enthaltende Diole zur Verbesserung der Anfärbbarkeit/Lichtstabilität miteinkondensiert werden.

Bei der Synthese der erfindungsgemäß eingesetzten Elastomeren werden die üblichen aromatischen Diisocyanate, gegebenenfalls auch mit geringen Anteilen an aliphatischen Diisocyanaten, verwendet. Besonders brauchbare Ergebnisse werden mit 2,4-Toluylendiisocyanat sowie entsprechenden Isomerengemischen, insbesondere aber mit 4,4'-Diphenylmethandiisocyanat bzw. entsprechenden Isomerengemischen mit untergeordneten Mengen an 2,4'- und/oder 2,2'-Isomeren erhalten. Selbstverständlich ist es auch möglich, Mischungen von aromatischen Diisocyanaten zu verwenden. Weiterhin sind beispielsweise nachstehende (cyclo)aliphatische Diisocyanate geeignet:
Hexamethylendiisocyanat, Isophorondiisocyanat, Dicyclohexylmethandiisocyanat oder tans- 1,4-Cyclohexandiisocyanat.

In der zweiten Stufe der Polyurethanharnstoffsynthese werden die gewünschten Harnstoffgruppen durch eine Kettenverlängerungsreaktion in die Makromoleküle eingeführt. Üblicherweise werden die in der Prepolymerstufe synthetisierten Makrodiisocyanate in Lösung mit aliphatischen Diaminen umgesetzt, z.B. Ethylendiamin, 1,3-Propandiamin, 1,2-Propylendiamin, Tetramethylendiamin, 1,3-Cyclohexandiamin, Isophorondiamin sowie Gemischen dieser Diamine, insbesondere Gemischen mit Ethylendiamin als Hauptkomponente. Die Kettenverlängerung selbst kann unter Verwendung von $CO_2$ als Retardierungsmittel in der Reaktionslösung ausgeführt werden. Durch die Verwendung einer geringen Menge an Monoaminen, z.B. Diethylamin, Dibutylamin, 4-Amino-2,2,6,6-tetramethylpiperidin oder N,N-Dimethylhydrazin, wahrend der Kettenverlängerungsreaktion kann das gewünschte Molekulargewicht eingestellt werden. Als Lösungsmittel eignen sich polare Lösungsmittel, z.B. Dimethylsulfoxid, N-Methylpyrrolidon und bevorzugt Dimethylformamid oder Dimethylacetamid.

Den erfindungsgemäß eingesetzten Polyurethanharnstoff-Lösungen können eine Vielzahl von Additiven, die den verschiedensten Zwecken dienen können, zugesetzt werden. Genannt seien z.B. Antioxidantien, Lichtschutzmittel, Schönungsfarbstoffe, Pigmente, Färbeadditive, Antistatika, abhäsiv wirkende Zusätze wie Magnesium-, Calcium-, Lithium-, Zink- oder Aluminiumstearate, Zinkoxide, Magnesiumoxide usw.

B) Vernetzte Kautschukpolymerisate

Die erfindungsgemäß einzusetzenden teilchenförmigen, vernetzten Kautschukpolymerisate (Komponente B) mit hohen Gelgehalten, sind von feinteiliger Struktur und bestehen aus elastischen Kautschuk(co)polymerisaten und/oder -pfropfpolymerisaten harzbildender Monomere auf die Kautschuke.

Die erfindungsgemäß eingesetzten Kautschuke B) sind teilchenförmig, vernetzt und werden vorzugsweise in den Elastan-Lösungsmitteln dispergiert und besitzen Glastemperaturen unter 0 ° C. Die Kautschuke B) haben bevorzugt mittlere Teilchendurchmesser ($d_{50}$) von 0,05 bis 1,5 µm, insbesondere 0,07 bis 0,5 µm und Gelgehalte (als Maß für die Vernetzung) von >50 Gew.-%, bevorzugt >70 Gew.-%. Derartige vernetzte, teilchenförmige Kautschuke sind in der Literatur vielfach beschrieben. Geeignet sind vernetzte Dien-, Olefin-, Acrylat- und Silikonkautschuke, bevorzugt werden Acrylat- und Silikonkautschuke eingesetzt.

Als Acrylatkautschuke sind vernetzte, feinteilige Emulsionspolymerisate bekannter Zusammensetzung, z.B. solche auf Basis von $C_1$-$C_{10}$-Alkylacrylaten, vorzugsweise $C_1$-$C_6$-Alkylacrylaten, gegebenenfalls in Mischung bis 15 Gew.-% Comonomeren wie Styrol, α-Methylstyrol, Methylmethacrylat, Butadien, Vinylmethylether, Acrylnitril, Methacrylnitril und wenigstens einem polyfunktionellen, vernetzenden Comonomer, z.B. Divinylbenzol, Glykolbisacrylate, Bisacrylamide, Phosphorsäuretriallylester, Triallyl(iso)-cyanurate, wobei die Acrylatkautschuke bis zu 5 Gew.-%, vorzugsweise 0,05 bis 4 Gew.-% der vernetzenden Comonomeren enthalten können. geeignet.

Dienkautschuke sind insbesondere vernetzte Polymerisate von Butadien, Isopren oder Chloropren mit gegebenenfalls bis 35 Gew.-%, vorzugsweise bis 20 Gew.-% an Comonomeren wie Styrol, Methylstyrol, Acrylnitril, $C_1$-$C_{24}$-Alkyl(meth)-acrylaten, Vinylether, Maleinanhydrid, Maleinhalbester oder (Meth)Acrylsäure und geringen Anteilen an mehrfunktionellen, ungesättigten Vernetzern, wie bereits angeführt. Die Dienpolymerisate können auch ganz oder teilweise hydriert sein.

Vernetzte Olefinkautschuke bestehen insbesondere aus Ethylen und Comonomeren wie Propylen, Isobutylen, Vinylacetat, Alkylacrylat, Kohlenmonoxid und anderen, für diese Stoffgruppe bekannten Monomeren, sowie Vernetzern.

Vorteilhaft geeignet sind auch mehrphasige Kautschuke, die aus einem stark vernetzten Kern aus Dienkautschuk und einer Hülle aus vernetzten Acrylatkautschuk bestehen (Kautschuk mit Kern-Mantel-Struktur). Die mehrphasigen Acrylatkautschuke enthalten 0,5 bis 40, insbesondere 0,5 bis 10, vorzugsweise 2 bis 4 Gew.-% Dienkautschuke als Kern. Derartige mehrphasige Kautschuke sind beispielsweise in der DE-A-3 200 070 beschrieben.

Besonders bevorzugt geeignet sind Pfropfpolymerisate harzbildender Monomerer auf vernetzte Dienkautschuke, Acrylat-Kautschuke, Acrylat/Dien-Kautschuke mit Kern/Mantel-Struktur oder Silikonkautschuke. Die Pfropfpolymerisate enthalten bevorzugt 50 bis 95 Gew.-% vernetzten Kautschuk (als Pfropfbasis) und 50 bis 5 Gew.-% pfropfpolymerisierte, harzbildende Monomere (Pfropfauflage). Die Kautschuke werden dabei aus den obengenannten Komponenten hergestellt, vorzugsweise unter Vermittlung pfropfvermittelnder

(graft-linking), mehrfunktioneller ungesättigter Verbindungen wie z.B. in US-3 808 180, Spalte 5 aufgezählt und erläutert. Beispiele sind Allylmethacrylat und Allylacrylat,ferner Allyl-, Methallyl- und Crotylester von Acrylsäure, Methacrylsäure; Maleinsäure(mono- und -diester); Fumarsäure(mono- und -diester) und Itaconsäure(mono- und -diester); Allyl-, Methallyl- und Crotyl-vinylether; Allyl-, Methallyl- und Crotyl-vinylthioether; N-Allyl-, -methallyl- oder -crotyl-maleimide; Vinylester von 3-Buten und 4-Pentencarbonsäure, Triallylcyanurat; O-Allyl-, Methallyl- oder Crotyl-O-alkyl-, -aryl-, -alkaryl- oder -aralkyl-P-vinyl, Allyl- oder Methallylphosphonat, Triallyl-, Trimethallyl- oder Tricrotylphosphat; O-Vinyl, O,O-Diallyl, Dimethylallyl- oder Dicrotylphosphat, Cycloalkenylester von Acrylsäure, Methacrylsäure, Maleinsäure(mono- und -diester), Furmarsäure(mono- und -diester), Itaconsäure(mono- und -diester) z.B. 2, 3 oder 4-Cyclohexenylacrylat, Bicyclo(2,2,1)hept-5-ene-2-yl, Ester von Acrylsäure, Methacrylsäure, Maleinsäure, Fumarsäure und Itaconsäure oder deren Ester; Vinylether und Vinylthioether von Cycloalkenolen und Cycloalkenthiolen z.B. Vinylcyclohex-4-ene-1-ylether, Vinylether auf Bicyclo(2,2,1)hept-5-ene-2-ol, Vinylester von Cycloalkencarboxylsäure oder Vinylbicyclo(2,2,1)hept-5-ene-2-carboxylate.

Die Pfropfpolymerisate werden in an sich bekannter Weise durch (Pfropf)Polymerisation der harzbildenden Monomeren in Gegenwart des Kautschuklatex hergestellt. Dabei wird ein Teil des so erzeugten Polymerisats der harzbildenden Monomere chemisch an den Kautschuk gebunden (aufgepfropft); daneben bildet sich auch immer etwas freies Polymerisat der harzbildenden Monomeren. Als Pfropfpolymerisat im Sinne dieser Erfindung wird daher das Umsetzungsprodukt der Pfropfpolymerisation, d.h. das Gemisch des eigentlichen Pfropfpolymerisats und des zwangsläufig anfallenden freien Harzpolymerisats der zu pfropfenden Monomeren, betrachtet. Falls erwünscht, kann auch das freie Harzolymerisat durch geeignete Lösungsmittel hieraus extrahiert werden.

Die Pfropfauflage wird aus olefinisch ungesättigten Monomeren hergestellt, insbesondere durch Polymerisation von Ethylen, Propylen, Isobutylen, Vinylacetat, Vinylpropionat, $C_1$-$C_{24}$-Alkylacrylaten, insbesondere $C_1$-$C_{10}$-Alkyl(meth)acrylaten, z.B. Methyl-, Ethyl-, n-, iso- oder tert.-Butyl-, Hexyl-, 2-Ethylhexyl- und Decyl(meth)acrylat, Butadien, Isopren, Vinylchlorid, Vinylidenchlorid, Vinylidenfluorid, Styrol, p-Methylstyrol, $\alpha$-Methylstyrol, Chlorstyrol, Bromstyrol, Acrylnitril, Methacrylnitril, $C_1$-$C_{10}$-Alkylmethacrylaten (insbesondere Methyl-, Ethyl-, Hexadecyl- und Decylmethacrylat), Maleinsäureimid, Maleinsäureanhydrid, Maleinsäure-(halb)ester, Acrylamid, Methacrylamid, Vinylurethanen, Vinylethern oder Mischungen daraus. Besonders bevorzugte Pfropfmonomere sind Styrol, Alkylacrylate, Alkylmethacrylate und Acrylnitril sowie deren Mischungen. In geringen Mengen können freie Carbonsäuren wie Acrylsäure oder Methacrylsäure mitverwendet werden. Die (Meth)Acrylate können auch gegebenenfalls durch funktionelle Gruppen substituiert sein, z.B. durch Hydroxyl-, Epoxid-, Oxetan- oder tert.-Aminogruppen. Beispiele sind Hydroxyethylmethacrylat, 2-Hydroxypropyl-methacrylat, Glycidylmethacrylat, Oxetanmethacrylat, Dimethylaminoethyl-methacrylat oder tert.-Butylaminoethylmethacrylat.

Vernetzte Silikon-Kautschuke enthalten Einheiten der Formeln (II) bis (V)

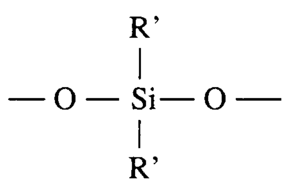
(II)

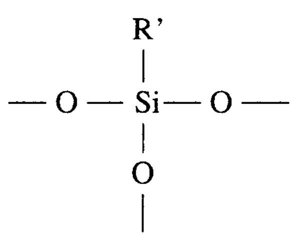
(III)

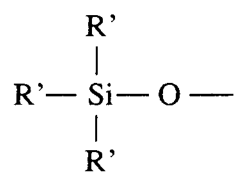
(IV)

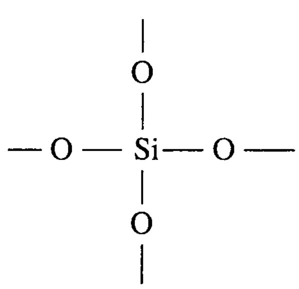
(V)

in welchen

R' einen einwertigen organischen Rest darstellt.

Einwertige organische Reste R' sind z.B. organische Reste mit 1 bis 40 C-Atomen, beispielsweise Alkylgruppen, vorzugsweise $C_1$-$C_{10}$-Alkyl, Arylgruppen, vorzugsweise $C_6$-$C_{24}$-Aryl, Alkylarylgruppen, vorzugsweise $C_7$-$C_{30}$-Alkylaryl, Arylalkylgruppen, vorzugsweise $C_7$-$C_{30}$-Arylalkyl, $C_1$-$C_{20}$-Alkoxy, $C_1$-$C_{20}$-Thioalkyl. Besonders bevorzugt sind: Methyl, Ethyl, tert.-Butyl, Amyl, Phenyl, Methylphenyl, Bisphenyl, Phenylmethyl. Ebenfalls in Frage kommen $C_1$-$C_{10}$-Alkoxy-Reste und radikalisch angreifbare Gruppen wie Vinyl- und Mercaptopropyl-Reste.

Bevorzugt sind mindestens 80 % aller Reste R' Methyl. Besonders bevorzugt sind Kombinationen aus Methyl und Ethyl.

Auf 100 Mol Einheiten der Formel $R'_2SiO_{2/2}$ (II) kommen vorzugsweise 0 bis 10 Mol Einheiten der Formel $R'SiO_{3/2}$ (III), 0 bis 1,5 Mol Einheiten $R'_3SiO_{1/2}$ (IV) und 0 bis 3 Mol Einheiten der Formel $SiO_{4/2}$ (V).

Bevorzugte Silikonkautschuke enthalten eingebaute Einheiten radikalisch angreifbarer Gruppen. Diese sind zur Radikaladdition oder Übertragungsreaktion befähigt. Solche Gruppen sind vorzugsweise Vinyl-, Allyl-, Chloralkyl-, Mercaptogruppen, vorzugsweise in Mengen von 2 bis 10 Mol-%, bezogen auf die Reste R'.

Besonders bevorzugte Silikonkautschuke sind teilchenförmige Polymerisate mit einer Kern/Mantel-Struktur, wobei diese aus

a) einem vernetzten Silikonkautschuk als Kern und

b) einem darauf pfropfpolymerisierten vernetzten Acrylatkautschuk

bestehen.

Das auf den Kern a) aufgepfropfte Kautschukpolymerisat b) stellt einen teil- bis hochvernetzten Acrylatkautschuk dar und ist ein Polymerisat aus 100 bis 60 Gew.-% Alkylacrylat, 30 bis 0 Gew.-% anderen, mit Alkylacrylat copolymerisierbaren Monomeren und gegebenenfalls 0,1 bis 10 Gew.-%, bezogen auf die Summe, Alkylacrylat und anderen Monomeren, eines vernetzenden Monomeren mit wenigstens zwei Vinyl- und/oder Allylgruppen im Molekül. Die Herstellung solcher gepfropfter Silikonkautschuke wird beispielsweise in der DE-A-3 742 180 beschrieben.

Pfropfkautschuke B) sind in einer Vielzahl von Patenten beschrieben, z.B. US-4 034 013 (insbesondere Spalten 2 und 3), US-3 668 244 (Spalten 3 bis 6), US-4 432 701 (Spalten 4 bis 6), radiale Teleblock-Copolymere (DE 27 13 509), wenn vernetzt, US-4 373 055 (Spalten 4 bis 5), US-4 375 532 (Spalten 3 bis 5), US-4 495 324, EP-A-376 006 (Seiten 5 und 6) oder DE-A-3 039 115. Eine Aufzählung von core-shell-Pfropfkautschuken wird auch in EP-234 060 B1 (Seite 4) gegeben.

Dispersionen der (Pfropf)Kautschuke in organischen Lösungsmitteln

Flüssige Dispersionen vernetzter, teilchenförmiger Kautschukpolymerisate in organischen Lösungsmitteln im Sinne der Erfindung und ihre Verwendung im Rahmen der Erfindung sind bekannt, z.B. DE-A-2910 154,2 910 168 und 2 910 153. Sie sind z.B. Dispersionen von Dien-/Acrylatkautschuken in den verschiedensten organischen Medien. Aus der DE-A-3 742 180 sind geeignete, fließfähige, stabile Dispersionen von vernetzten, feinteiligen Silikonkautschuken, dispergiert in N,N-substituierten Amiden, bekannt.

Als organische Medien für die erfindungsgemäß eingesetzten flüssigen Dispersionen der Kautschukpolymerisate werden organische Amide verwendet wie Dimethylformamid, Dimethylacetamid, N-Methylpyrrolidon, N-Methylcaprolactam, ferner Tetramethylharnstoff, Hexamethylphosphorsäure-trisamid, 1,3-Dimethyl-2-imidazolidinon, N-Vinylcaprolactam; vorzugsweise aber Dimethylacetamid und Dimethylformamid, da diese auch als Lösungsmittel für die segmentierten Polyurethanharnstoff-Elastomere dienen.

Die erfindungsgemäß verwendeten, flüssigen, organischen, praktisch wasserfreien Dispersionen besitzen einen Polymerisatgehalt von 3 bis 45 Gew.-%, vorzugsweise 5 bis 30 Gew.-%.

Im erfindungsgemäßen Verfahren werden die flüssigen organischen Dispersionen der Kautschukkomponente B) den Polyurethanharnstoff-Elastomer-Lösungen A) unter kräftiger Durchmischung, gegebenenfalls unter Zusatz von weiteren Additiven, wie Pigmenten oder Stabilisatoren, zugemischt.

Die so hergestellte Elastomer-Lösungen, die die Komponenten A), dispergierte B) und gegebenenfalls Additive enthalten, besitzen vorzugsweise Gesamtfeststoffgehalte von 15 bis 40 Gew.-%.

Da die dispergierten Kautschuke B) nicht wesentlich zur Viskosität des Polyurethanharnstoff-Elastomer-Lösungen beitragen, kann der Feststoffgehalt der erfindungsgemäßen Elastomer-Lösungen (Spinnlösungen) vorteilhaft erhöht werden. Dies führt zu verbesserter Spinnausbeute/Produktivität bei der Herstellung von Elastanfäden.

Die Verspinnung der erfindungsgemäßen Spinnlösung kann sowohl nach dem Naßals auch nach dem Trockenspinnverfahren erfolgen, bevorzugt ist das Trockenspinnverfahren. Die Lösungen können jedoch

auch auf Unterlagen aufgetrocknet werden (Filmbildung) bzw. auf z.B. textilen Unterlagen entsprechende Textilbeschichtungen ergeben. Ferner lassen sich derartige Elastan-Lösungen mit wäßrigen Lösungen bzw. nichtlösungsmittelhaltigen Lösungen, zu - gegebenenfalls mikroporösen - Folien oder Beschichtungen koagulieren.

Herstellung der Ausganskomponenten A)

Beispiel 1 (Vergleich und Ausgangskomponente zu Beispielen 2 bis 6)

4000 g eines Polyesterdiols vom Molekulargewicht $M_n = 2014$ auf Basis von Adipinsäure, Hexandiol-1,6 und Neopentylglykol (Molverhältnis der Diole 65:35) wurden mit 2108 g Dimethylacetamid gemischt und mit 920 g Diphenylmethan-4,4'-diisocyanat (Desmodur® 44/BAYER AG) versetzt. Anschließend wurde 40 Minuten auf 50 ° C erwärmt, bis der NCO-Gehalt des NCO-Prepolymeren 2,60% betrug.

Zu einer Mischung aus 70 g Ethylendiamin und 16.200 g Dimethylacetamid wurden 140 g $CO_2$ zugegeben. Zu dieser frisch hergestellten Carbamatsuspension wurden unter intensivem Rühren 5000 g der NCO-Prepolymerlösung innerhalb von 15 Minuten zugesetzt. Man erhält eine klare, homogene Elastomerlösung mit einem Elastomerfeststoffgehalt von 22 % und einer Lösungsviskosität von 119 Pa.s/20 ° C. Die inhärente Viskosität betrug 1,36 dl/g (5 g Elastomer-Feststoff pro Liter Dimethylacetamid bei 30 ° C). Zu dieser viskosen Elastomerlösung wurden, bezogen auf Polyurethanharnstoff-Feststoff, 0,3 Gew.-% Mg-Stearat, 1 Gew.-% Cyanox® 1790 (American Cyanamide, USA), 0,5 Gew.-% Tinuvin® 622 (Ciba Geigy) 7 ppm Makrolex®-Violett B (BAYER AG), 0,5 Gew.-% des Polyethersiloxans Silwet® L7607 (ein Polyether/Polydimethylsiloxan-Copolymer, Lieferfirma Unicon Carbide Corp., USA), zugesetzt. 2.500 g dieser Polymerlösung wurde nach dem Trockenspinnverfahren versponnen. Der Rest der Polymerlösung wurde für die Beispiele 2 bis 6 eingesetzt.

Herstellung der Komponente B)

Beispiele

I) n-Butylacrylatkautschuk

Vernetzer, teilchenförmiger n-Butylacrylatkautschuk mit einem Gelgehalt von 90 % (in Toluol gemessen) und einem mittleren Teilchendurchmesser ($d_{50}$) von 0,48 µm, hergestellt durch wäßrige Emulsionspolymerisation (Herstellung, z.B. s. DE-A-3 039 115, Beispiel 2a).

II) Acrylatpfropfkautschuke (mit Kern/Mantel-Struktur)

Pfropfpolymerisat aus 70 Gew.-% eines vernetzten, teilchenförmigen n-Butylacrylatkautschuks gemäß Beispiel I) als Pfropfgrundlage und 30 Gew.-% pfropfpolymerisierter Monomermischungen jeweils folgender Zusammensetzung:

| | mittlerer Teilchendurchmesser ($d_{50}$) in µm<br>Teilchengröße | Gelgehalt in Gew.-% (gemessen in Tetrahydrofuran) |
|---|---|---|
| Beispiel II 1: Styrol: 72 Gew.-%, Acrylnitril: 28 Gew.-% | 0,51 | 83 |
| Beispiel II 2: Methylmethacrylat: 100 Gew.-% | 0,49 | 81 |
| Beispiel II 3: Methylmethacrylat: 90 Gew.-%<br>2-Hydroxyethylmethacrylat: 10 Gew.-%<br>(zur Herstellung vgl. z.B. DE-A-3 006 804) | 0,52 | 79 |

III) Silikonkautschuk

Vernetzter, teilchenförmiger Silikonkautschuk, hergestellt durch Polymerisation in wäßriger Emulsion einer Mischung aus 94,6 Gew.-Teilen Octamethylcyclotetrasiloxan, 3,0 Gew.-Teilen Tetramethyltetravinylcyclotetrasiloxan und 2,4 Gew.-Teilen γ-Mercaptopropylmethyldimethoxysilan, mit Dodecylbenzolsulfonsäure als Initiator und Emulgator (mittlerer Teilchendurchmesser ($d_{50}$) 0,22 µm). Der Gelgehalt des Polymers beträgt 92 % (in Toluol gemessen) (z. Herstellung, z.B. s. DE-A-3 742 180, Beispiel 1).

IV) Silikonkautschuk mit Kern/Mantel-Struktur

IV1) Pfropfpolymerisat aus 70 Gew.-% eines vernetzten, teilchenförmigen Silikonkautschuks gemäß Beispiel III) (als Pfropfgrundlage) und 30 Gew.-% einer darauf pfropfpolymerisierten Mischung aus n-Butylacrylat, 2-Hydroxyethylmethacrylat und Triallylcyanurat im Gewichtsverhältnis 79,5/19,5/1,0 (z. Herstellung, z.B. s. DE-A-3 742 180, Beispiel 2.2).

IV2) Pfropfpolymerisat aus 70 Gew.-% eines vernetzten, teilchenförmigen Silikonkautschuks gemäß Beispiel III) als Pfropfgrundlage und 30 Gew.-% einer pfropfpolymerisierten Mischung aus n-Butylacrylat, 3-Ethyl-3-methacryloyloxymethyl-oxetan und Triallylcyanurat im Gewichtsverhältnis 79,5/19,5/1,0.

V) Organische Dispersionen der Kautschukpolymerisate (Herstellung, s. z.B. DE-A-3 742 180)
Eingesetzt wurden in den Beispielen folgende Dispersionen:
V1) Dispersionen des Kautschuks gemäß Beispiel I) in Dimethylacetamid; Feststoffgehalt: 10,4 Gew.-%.
V2) Dispersionen des Acrylatpfropfkautschuks gemäß Beispiel III) in Dimethylacetamid; Feststoffgehalt: 11,1 Gew.-%.
V3) Dispersion des Acrylatpfropfkautschuks gemäß Beispiel II2) in Dimethylacetamid; Feststoffgehalt: 10,6 Gew.-%.
V4) Dispersion des Acrylatpfropfkautschuks gemäß Beispiel II3) in Dimethylacetamid; Feststoffgehalt: 10,0 Gew.-%.
V5) Dispersion des Silikonkautschuks (Kern/Mantel) gemäß Beispiel IV1) in Dimethylacetamid; Feststoffgehalt: 27 Gew.-%.
V6) Dispersion des Silikonkautschuks (Kern/Mantel) gemäß Beispiel IV2) in Dimethylacetamid; Feststoffgehalt: 22,8 Gew.-%.

Herstellung der erfindunsgemäßen Mehrkomponentenfäden auf Elastan-Basis

Beispiel 2

Zu 2312 g der Elastanlösung aus Vergleichsbeispiel 1 wurden 489 g der organischen Dispersion Beispiel V1) gegeben und gut vermischt. Man erhält eine homogen erscheinende Polymerlösung, enthaltend dispergierte Teilchen, mit einem Feststoffgehalt von 20 Gew.-% und einer Lösungsviskosität von 61 Pa.s/20 °C. Die inhärente Viskosität betrug 1,25 dl/g. Die Polymerlösung wurde nach dem Trockenspinnverfahren versponnen. Die Spinnlösung konnte ohne Schwierigkeiten, d.h. ohne Düsenverstopfung, zu Elastomer-Fäden versponnen werden (Eigenschaften s. Tabellen 1) und 2)).

Beispiel 3

Zu 2215 g der Elastanlösung aus Vergleichsbeispiel 1 wurden 441 g der organischen Dispersion Beispiel V2) gegeben und gut vermischt. Man erhält eine homogen erscheinende Polymerlösung mit dispergierten Kautschuk-Teilchen, mit einem Feststoffgehalt von 21 Gew.-% und einer Lösungsviskosität von 60 Pa.s/20 °C; die inhärente Viskosität betrug 1,25 dl/g. Die Polymerlösung war nach dem Trockenspinnverfahren glatt verspinnbar.

Beispiel 4

Zu 2252 g der Elastanlösung aus Vergleichsbeispiel 1 wurden 467 g der organischen Kautschuk-Dispersion Beispiel V3) gegeben und gut vermischt. Man erhält eine homogen erscheinende Polymerlösung mit dispergierten Kautschuk-Teilchen und mit einem Feststoffgehalt von 20 Gew.-% sowie einer Lösungsviskosität von 60 Pa.s/20 °C. Die inhärente Viskosität betrug 1,24 dl/g. Die Polymerlösung war nach dem Trockenspinnverfahren glatt verspinnbar.

Beispiel 5

Zu 2034 g der Elastanlösung aus Vergleichsbeispiel 1 wurden 448 g der organischen Dispersion Beispiel V4) gegeben und gut vermischt. Man erhält eine homogen erscheinende Polymerlösung mit dispergierten Kautschuk-Teilchen und mit einem Feststoffgehalt von 20 Gew-% sowie einer Lösungsviskosität von 54 Pa.s/20 °C. Die inhärente Viskosität betrug 1,26 dl/g. Die Polymerlösung war nach dem Trockenspinnverfahren glatt verspinnbar.

Mittels Transmissions-Elektronenmikroskopie (TME) wurden Querschnittsaufnahmen an den versponnenen Fäden vorgenommen (Tieftemperatur-Ultradünnschnitt-Vergrößerungen 25.000:1, Figur 1 bzw. 60.000:1, Figur 2). Dabei zeigt sich, daß eine feine Verteilung der vernetzten Kautschukpartikel innerhalb der Elastan-Matrix vorliegt. Die Teilchengröße beträgt etwa 0,2 µm; wie aus der stark vergrößerten Aufnahme (60.000:1) ersichtlich, sind dabei offensichtlich die Randzonen etwas gequollen bei unverändertem Kern (vgl. Abbildung 1 und 2).

Beispiel 6

Zu 2403 g der Elastomerlösung aus Vergleichsbeispiel 1 wurden 196 g der organischen Dispersion Beispiel V5) gegeben und gut vermischt. Man erhält eine homogen erscheinende Polymerlösung mit darin dispergierten Kautschuk-Teilchen, mit einem Feststoffgehalt von 22,4 Gew.-% und mit einer Lösungsviskosität von 70 Pa.s/20 °C. Die inhärente Viskosität betrug 1,30 dl/g. Die Polymerlösung war nach dem Trockenspinnverfahren glatt verspinnbar.

Beispiel 7 (Vergleich zu Beispiel 8):

1190 g eines Polyesterdiols (auf Basis Adipinsäure, Hexandiol, Butandiol, Neopentylglykol) mit Molekulargewicht Mn von 3313 und 510 g eines Polytetramethylenetherdiols (Terathane® 2000, DuPont, Mn von 2066) wurden mit 850 g Dimethylacetamid gemischt und mit 283 g Diphenylmethan-4,4'-diisocyanat versetzt. Anschließend wurde 60 Minuten auf 33 bis 50 °C erwärmt, bis der NCO-Gehalt des NCO-Prepolymeren 2,14 % (bezogen auf Feststoff) betrug. Der Feststoffgehalt der NCO-Prepolymerlösung betrug 70 %.

Zu einer Mischung aus 26 g Ethylendiamin und 1,3 g Diethylamin wurden 54 g $CO_2$ gegeben. Zu dieser Carbamatsuspension wurden unter intensivem Rühren 2418 g der NCO-Prepolymerlösung innerhalb von 15 Minuten zugesetzt. Man erhält eine klare, homogene Elastomerlösung mit einem Elastomerfeststoffgehalt von 22,7 Gew.-% und einer Lösungsviskosität von 105 Pa.s/20 °C. Die inhärente Viskosität betrug 1,39 dl/g. Zu dieser viskosen Elastomerlösung wurden Zusätze, wie in Beispiel 1) beschrieben, zugegeben. Die Polymerlösung wurde nach dem Trockenspinnverfahren versponnen.

Beispiel 8

Zu 2403 g der fertigen Elastanlösung aus Vergleichsbeispiel 7 wurden 246 g der organischen Dispersion Beispiel V6) gegeben und gut vermischt. Man erhält eine homogene Polymerlösung mit einem Feststoffgehalt von 22,4 Gew.-% und einer Lösungsviskosität von 76 Pa.s/20 °C. Die inhärente Viskosität betrug 1,39 dl/g. Die Polymerlösung war glatt nach dem Trockenspinnverfahren verspinnbar.

Die Untersuchung der Abgasechtheit erfolgte durch den Hochtemperatur-Stickstoffoxidechtheitstest: 90 Minuten bei 60 °C mit 600 ppm $NO_2$.

Die Untersuchung der Lichtechtheit erfolgte nach einer Belichungszeit von 300 Stunden im Xeno-Test 150 (DIN 54 004).

Bewertung der Lichtechtheit im Xeno-Test 150 und der Schadgasechtheit im $NO_x$-Test

Aus den Elastanfäden im Beispiel 4, 5 und dem Vergleichsbeispiel 1 sowie im Beispiel 7 und dem Vergleichsbeispiel 6 wurden Strickstrümpfe hergestellt. Diese Strickstrümpfe wurden nach je drei Rezepturen behandelt:

1. Original

2 Stunden in Petrolether bei Raumtemperatur
Flotte 1:30

2. Peroxidbleiche

| | |
|---|---|
| $MgSO_4.7H_2O$ | 0,2 g/l |
| Levapon AN fl. | 0,5 ml/l |
| Wasserglas | 2 ml/l |
| $H_2O_2$ 35 % | 6 ml/l |
| Blankophor BA fl. | 0,7 % |
| Blankophor DCB ultraf. | 0,2 % |

80 Min. bei 90 bis 95°C
Flotte 1:30

3. Saure Aufhellung

| | |
|---|---|
| Blankit IN | 2 g/l |
| Calgon T | 2 g/l |
| Diadavin EWN 200 % | 0,5 g/l |
| Blankophor Cl fl. | 0,5 g/l |

40 Min. bei 80 bis 85°C, essigsauer pH 4
Flotte 1:30

Blankophore® von Firma BAYER AG
Diadavin® von Firma BAYER AG
Levapon® von Firma BAYER AG
Blankit® von Firma BAYER AG
Calgon ®T von Firma Benckiser

Die so behandelten Elastanstrickstümpfe wurde zur Prüfung der Lichtechtheit 100, 200, 300 h dem Xeno-Test 150 und einem Stickoxidechtheitstest unterzogen.

Im Xenontest liefert das Elastan aus Beispiel 7 gegenüber dem Vergleichselastan (Beispiel 6), selbst nach 300 h Belichtung, eine deutlich verbesserte Lichstabilität (geringere Verfärbung).

Im Stickoxidechtheitstest liefern die Elastane aus Beispiel 4 und 5 gegenüber dem Vergleichselastan (Beispiel 1), insbesondere nach der sauren Aufhellung, eine merklich beserte $NO_x$-Echtheit (sehr deutlich geringere Verfärbung als der Vergleich).

Der Zusatz an organischer Dispersion in den Beispielen 2 bis 6 und 8 wurde so gewählt, daß der Feststoffgehalt an Acrylatpfropfkautschuk bzw. Silikonkautschuk jeweils 10 Gew.-%, bezogen auf Polyurethan(harnstoff)-Elastomer-Feststoff betrug.

Die allgemeinen Spinnbedingungen für die gemäß den Beispielen 1 bis 6 hergestellten Spinnlösungen waren wie folgt:

| | |
|---|---|
| Schachttemperatur: | 200°C |
| Lufttemperatur: | 220°C |
| Luftmenge: | 40 $m^3$/h |
| Düse: | 12 Loch, Durchmesser 0,3 mm |
| Spinnkopftemperatur: | 80°C |
| Luftdralldüse: | 0,6 bar |

Abzugsgeschwindigkeit aus den Galetten 1,2,3: 325/340/340 m/min

Die erfindungsgemäßen Spinnlösungen (gemäß Beispiel 2 bis 6) konnten ohne Probleme, d.h. ohne Fadenabrisse, ohne Filter- bzw. Spinndüsenverstopfung und ohne Verklebungen auf den Spulen, unter den gleichen Spinnbedingungen wie die Spinnlösung gemäß Beispiel 1 (Vergleich) versponnen werden.

In Tabelle 1 und 2 sind die textilen Daten und in Tabelle 2 der Heißwasserspannungsabfall der Elastanfäden gemäß den Beispielen 1 bis 6 zusammengestellt.

Meßmethoden:

Die in den Beispielen erwähnten Meßgrößen wurden wie folgt bestimmt: Die inhärente Viskosität ($\eta_i$) der

Elastomeren wurde in verdünnter Lösung von 0,5 g/100 ml Dimethylacetamid bei 30 ° C durch Bestimmung der relativen Viskosität ($\eta_r$) gegenüber dem reinen Lösungsmittel bestimmt und nach der Formel

$$\eta = \frac{t_1}{t_0}$$

$t_1$: Durchlaufzeit (sec) der Polymerlösung

$t_0$: Durchlaufzeit (sec) des reinen Lösungsmittels

c = Konzentration in g/100 ml
in die inhärente Viskosität ($\eta_i$) umgerechnet.
Umrechnungsformel:

$$\eta i = \frac{\ln \eta r}{c}$$

N 53 815 bestimmt (cN/dtex). Die Höchtzugkraftdehnung (HZKD) bzw. Bruchdehnung (in %) erfolgte ebenfalls nach DIN 53 815. Die Kraftaufnahme bei 100 % bzw. 300 % (R 100 bzw. R 300) erstmaliger Dehnung wurde bei einer Dehnungsgeschwindigkeit von 4 x $10^{-3}$ Meter pro Sekunde in cN/dtex bestimmt. Die Messung von heat distortion Temperatur (HDT) bzw. Heißwasserspannungsabfall (HWSA) erfolgt nach Methoden, die in Chemiefasern/Textilindustrie, Januar 1978, Heft 1/78, 38./80. Jahrgang auf Seite 44-49 beschrieben sind. Entsprechende Angaben finden sich auch in DE-OS 25 42 500 (1975).

Tabelle 1: Textile Daten der Elastanfäden gemäß den Beispielen 1 bis 6

| Beispiel | Titer [dtex] | FF [cN/dtex] | HZKD [%] | $\epsilon$ [%] | $R_{100}$ [cN/dtex] | $R_{300}$ [cN/dtex] | HDT [°C] |
|---|---|---|---|---|---|---|---|
| 1 (Vergleich zu Beispiel 2-6) | 155 | 0.95 | 427 | 21 | 0.055 | 0.220 | 164 |
| 2 | 159 | 0.96 | 432 | 15 | 0.058 | 0.281 | 168 |
| 3 | 154 | 1.00 | 452 | 17 | 0.059 | 0.320 | 168 |
| 4 | 155 | 0.96 | 440 | 17 | 0.061 | 0.281 | 168 |
| 5 | 151 | 1.01 | 490 | 17 | 0.058 | 0.225 | 168 |
| 6 | 153 | 1.06 | 430 | 16 | 0.057 | 0.345 | 170 |

FF: Bruchfestigkeit
HZKD: Bruchdehnung (Höchstzugkraftdehnung)
$\epsilon$: Restdehnung nach fünfmaliger Dehnung auf 300 %/30 sec. Wartezeit
$R_{100}$ Kraftaufnahme bei 100 bzw 300 % Dehnung
$R_{300}$ " " "
HDT: Heat distortion temperature

Die erfindungsgemäßen Fäden ergaben höhere Festigkeit, höhere (!) Bruchdehnung, geringere Restdehnungen, höhere Moduli und höhere HDT-Werte.

Tabelle 2: Heißwasserspannungsabfall (HWSA)

| Beispiel | Ⓐ in Luft ($10^{-3}$cN/dtex) | Ⓑ in Wasser/95°C ($10^{-3}$cN/dtex) | Ⓒ in Luft entlastet bleibende Dehnung (%) |
|---|---|---|---|
| 1 (Vergleich zu Beispiel 2-6) | 39,8 | 17,9 | 44 |
| 2 | 41,8 | 21,8 | 34 |
| 3 | 43,9 | 21,3 | 38 |
| 4 | 44,8 | 21,0 | 40 |
| 5 | 44,1 | 22,4 | 40 |
| 6 | 47,7 | 25,7 | 34 |

Die Werte (Spannung in Luft bzw. Heißwasser, sowie die bleibenden Dehnungen) sind erfindungsgemäß deutlich verbessert.

Bestimmung des Heißwasserspannungsabfalls (HWSA):

Zwei Schlingen des zu messenden Fadens mit 100 mm Einspannlänge (Vorspanngewicht 0,0009 cN/dtex) werden bei Normalklima um 100 % gedehnt. Die sich nach 2 Minuten ergebende Fadenspannung (cN/dtex) wird gemessen (Wert Ⓐ in Tabelle 2). Der auf 100 % gedehnt gehaltene Faden wird anschließend in Wasser von 95 ° C getaucht. Die sich ergebende Spannung nach 3 Minuten wird bestimmt (Wert Ⓑ in Tabelle 2). Danach wird der Faden aus dem Wasserbad genommen und 2 Minuten bei Raumtemperatur belassen. Der in die Einspannklemme gespannte Faden wird bis zur Spannungslosigkeit entlastet. Die verbleibende Restdehnung wird bestimmt (Wert Ⓒ in Tabelle 2). Das Elastan ist umso besser, je höher der Wert Ⓐ und Ⓑ und umso niedriger der Wert Ⓒ ist.

Wie aus Tabelle 1 hervorgeht, wirken die erfindungsgemäß zugesetzten Kautschukpolymerisate (Komponente B)) als Modifikatoren, d.h., sie verbessern gegenüber dem Ausgangsmaterial (gemäß Beispiel 1, Vergleich zu den Beispielen 2 bis 6) die Bruchdehnung (HZKD, siehe Beispiele 3 bis 5) und die Kraftaufnahme ($R_{100}$, $R_{300}$) bei 100 und 300 % Dehnung (siehe Beispiele 2 bis 6). Die Thermostabilität (HDT) erhöht sich ebenfalls durch die erfindungsgemäß zugesetzten Zusätze (siehe Beispiele 2 bis 6). Die Restdehnung wird durch die erfindungsgemäß zugesetzten Komponenten B) reduziert (siehe Beispiele 2 bis 6).

Weiterhin wird durch die erfindungsgemäß eingesetzten Kautschukpolymerisate B) der Heißwasserspannungsabfall (siehe Tabelle 2) und damit auch die Heißwasserbeständigkeit deutlich gegenüber dem Ausgangsmaterial (siehe Beispiel 1, Vergleich zu Beispielen 2 bis 6) verbessert (siehe Beispiele 2 bis 6).

## Patentansprüche

1. Über Lösung verarbeitete Mehrkomponenten Elastomere auf Basis von segmentierten Polyurethanharnstoffen/Kautschukpolymerisat-Mischungen, bestehend aus
   A) 70 bis 99,5 Gew.-Teilen eines nicht über den Schmelzzustand verarbeitbaren, segmentierten löslichen Polyurethanharnstoffelastomeren
   und
   B) 0,5 bis 30 Gew.-Teilen eines in der Polyurethanharnstoff-Komponente dispergierten Kautschukpolymerisats, das teilchenförmig vernetzt ist, einen Gelgehalt von ≧ 50 Gew.-% und einem mittleren Teilchendurchmesser von 0,05-1,5 $\mu$m besitzt, sowie
   C) üblichen Zusatzstoffen in der Mischung (A + B).

2. Über Lösung verarbeitete Mehrkomponenten-Fäden auf Basis von Elasthan/Kautschukpolymerisat-Mschungen nach Anspruch 1 bestehend aus
   A) 85-95 Gew.-% Teilen des segmentierten Polyurethanharnstoff-Elastomers
   B) 5-15 Gew.-% Teilen eines Kautschuk (co)- oder pfropypolymerisats, sowie
   C) üblichen Zusatzstoffen in der Mischung (A + B).

3. Über Lösung verarbeitete Mehrkomponenten-Elastomere nach Anspruch 1, bei denen die dispergierten teilchenförmigen, vernetzten Kautschukpolymerisate Dien-, Olefin-, (Meth)Acrylat- und Silikonkautschuke auf Co-polymerisat oder -Pfropfpolymerisat-Basis darstellen.

4. Über Lösung verarbeitete Mehrkomponenten-Elastomere nach Anspruch 1-3, bei denen die dispergierten, teilchenförmig, vernetzten Kautschukpolymerisate, Kautschuk-Pfropfpolymerisate harzbildender Monomerer mit 50-95 Gew.-% vernetzten Kautschuk von ein- oder mehrschaligem Aufbau als Pfropfbasis und 50-5 Gew.-% pfropfpolymerisierter, harzbildender Monomerer als Pfropfenauflage bestehen.

5. Verfahren zur Herstellung elastischer Mehrkomponenten-Fäden gemäß Anspruch 1, dadurch gekennzeichnet, daß in organischen Medien dispergierte, feinteilige Kautschukpolymerisate in Polyurethanharnstoff-Elastan-Lösungen eingemischt und danach gemeinsam naß oder trocken versponnen werden.

6. Verfahren nach Anspruch 5, dadurch gekennzeichnet, daß als organische Medien organische Amide, insbesondere Dimethylformamid und Dimethylacetamid eingesetzt werden.

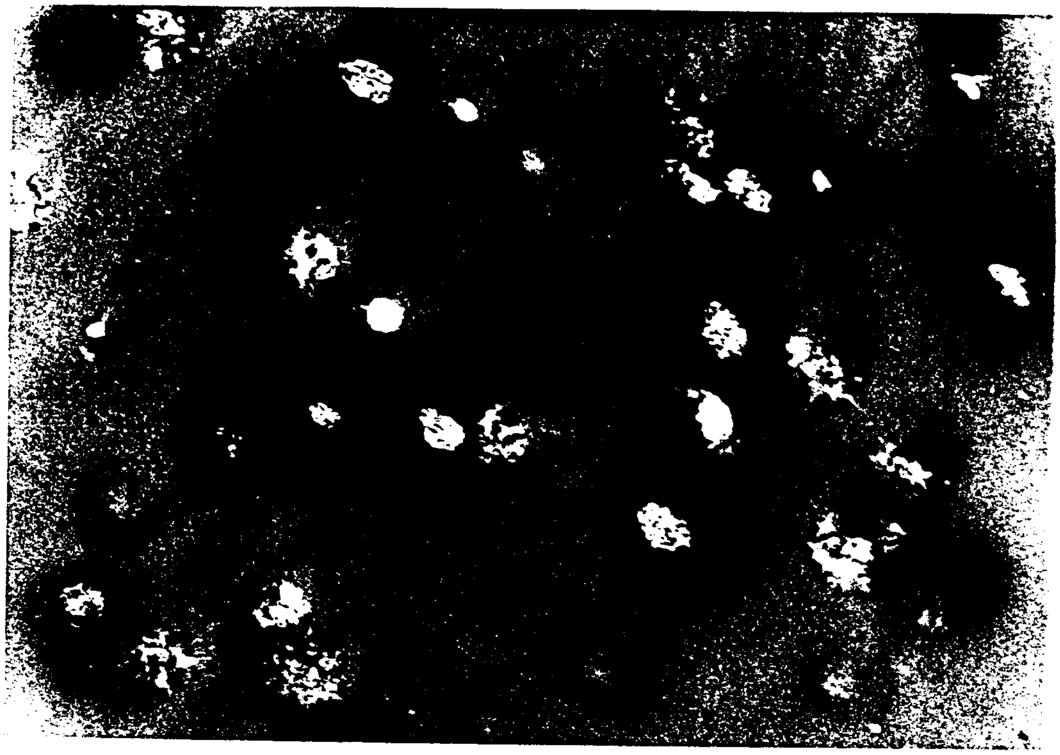

25000:1 1µm

FIG.1

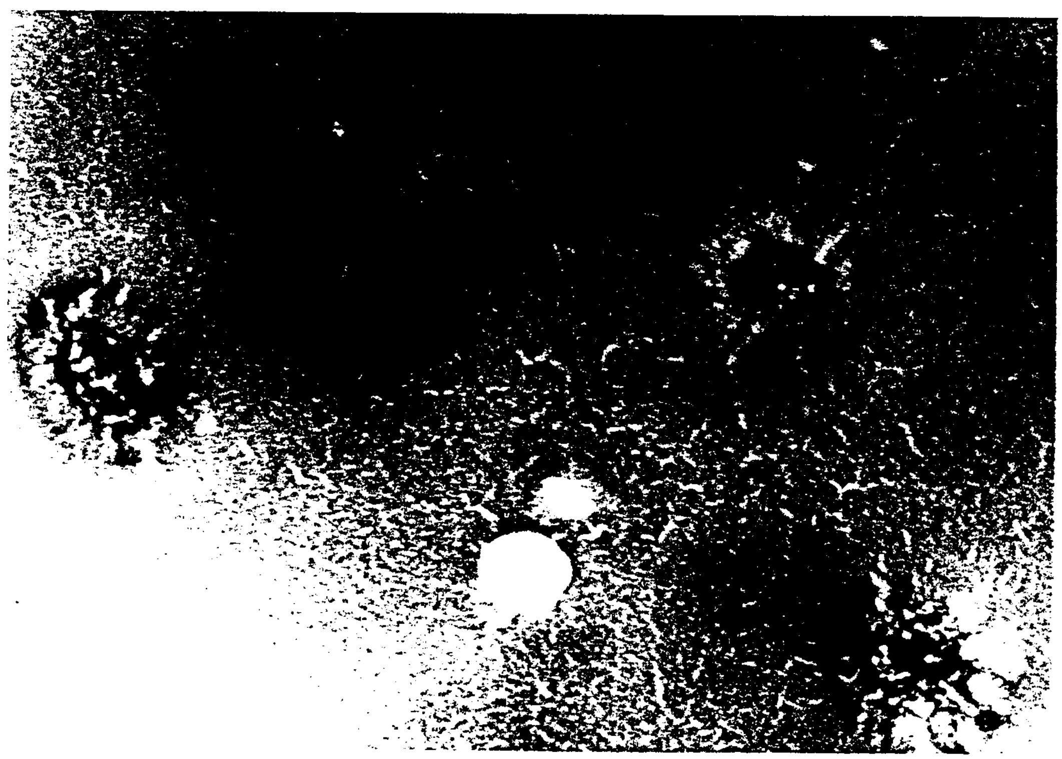

60000:1 0,1µm

FIG.2

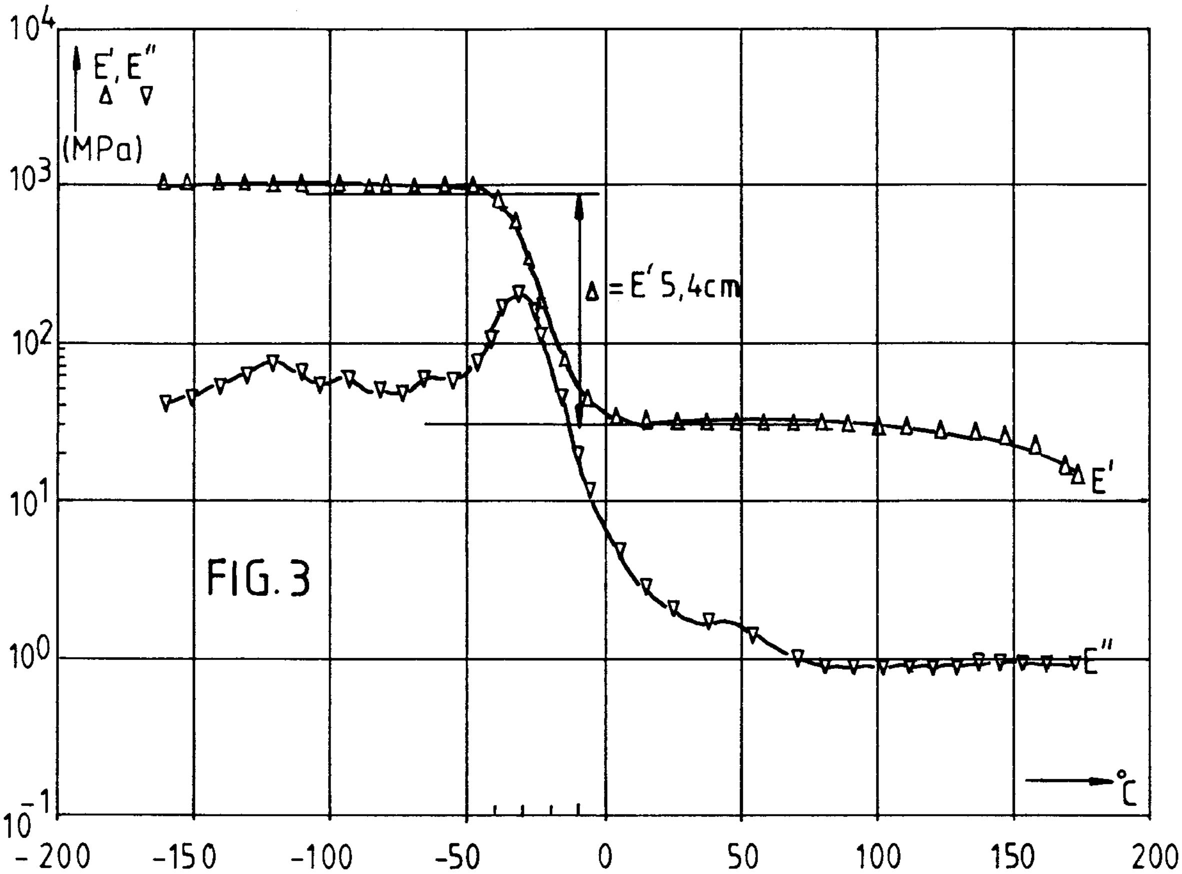
E', E''
(MPa)
Δ=E' 5,4cm
E'
E''
°C
$10^4$
$10^3$
$10^2$
$10^1$
$10^0$
$10^{-1}$
-200
-150
-100
-50
0
50
100
150
200

FIG. 3

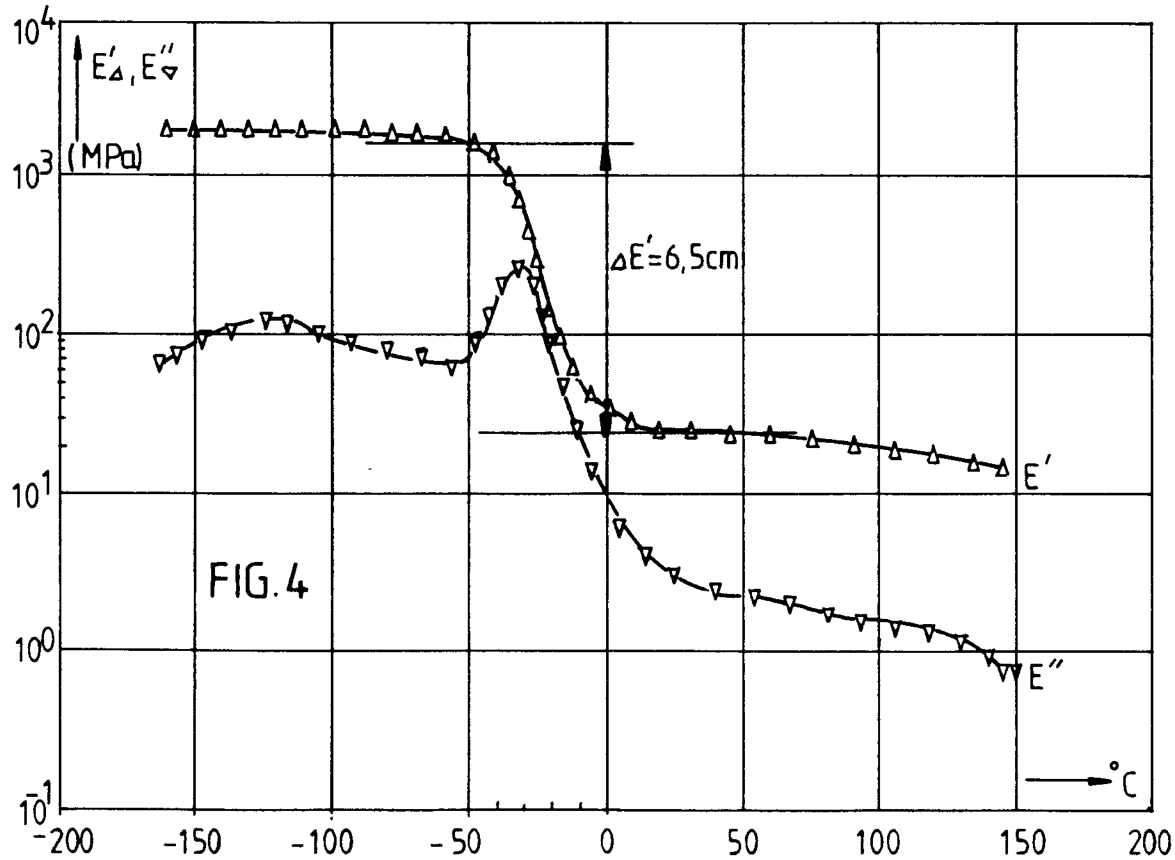
E'Δ, E''∇
(MPa)
ΔE'=6,5cm
E'
E''
°C
$10^4$
$10^3$
$10^2$
$10^1$
$10^0$
$10^{-1}$
-200
-150
-100
-50
0
50
100
150
200

FIG. 4

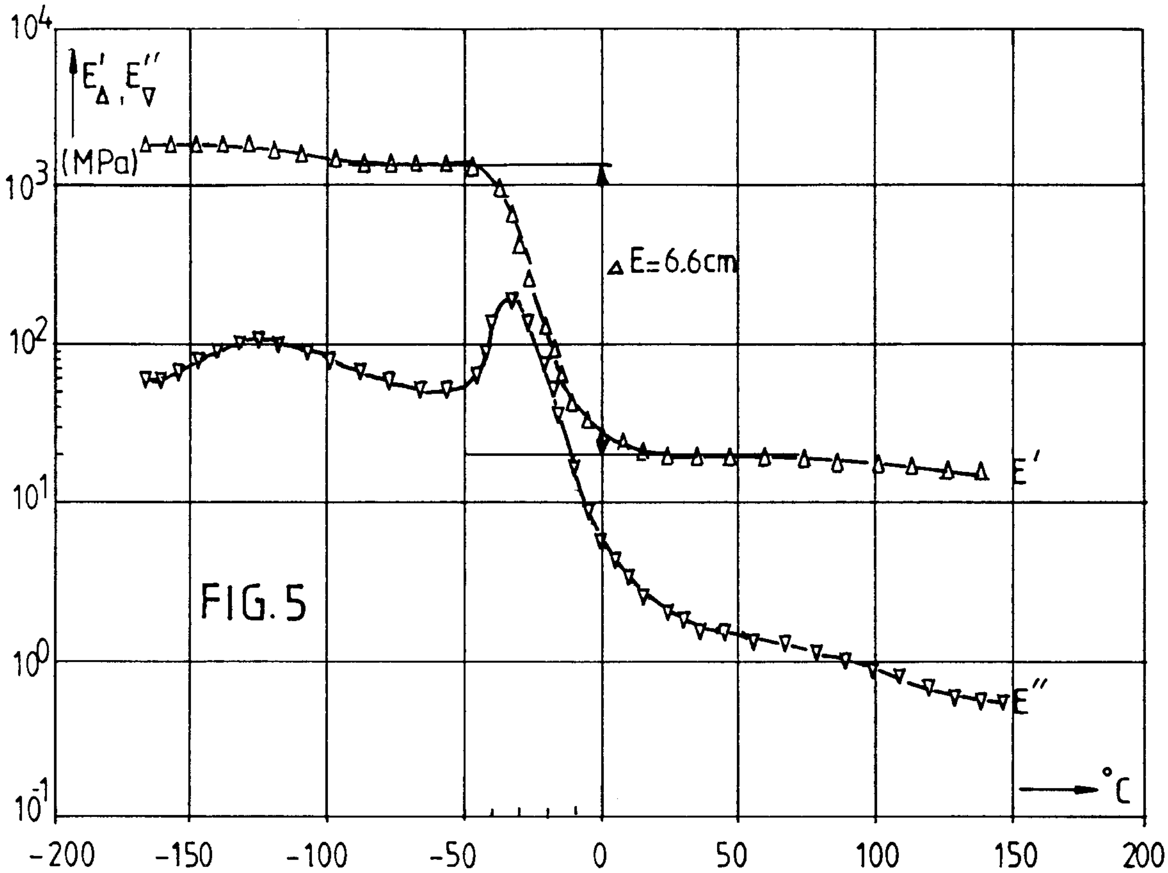
$10^4$
$E'_\Delta, E''_\nabla$
(MPa)
$10^3$
$\Delta E$=6.6cm
$10^2$
$10^1$
E'
$10^0$
E''
$10^{-1}$
°C
-200
-150
-100
-50
0
50
100
150
200

FIG.5

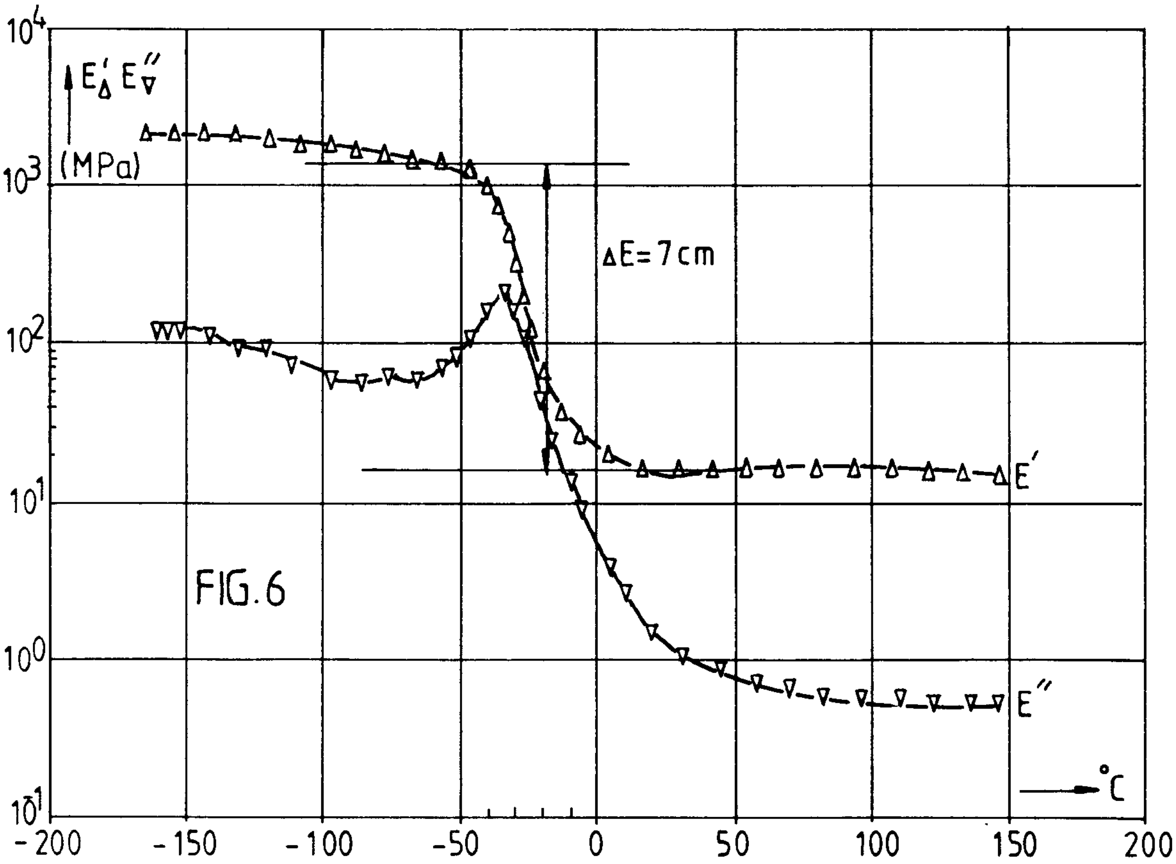
$10^4$
$E'_\Delta$ $E''_\nabla$
(MPa)
$10^3$
$\Delta E$=7cm
$10^2$
$10^1$
E'
$10^0$
E''
$10^{-1}$
°C
-200
-150
-100
-50
0
50
100
150
200

FIG.6

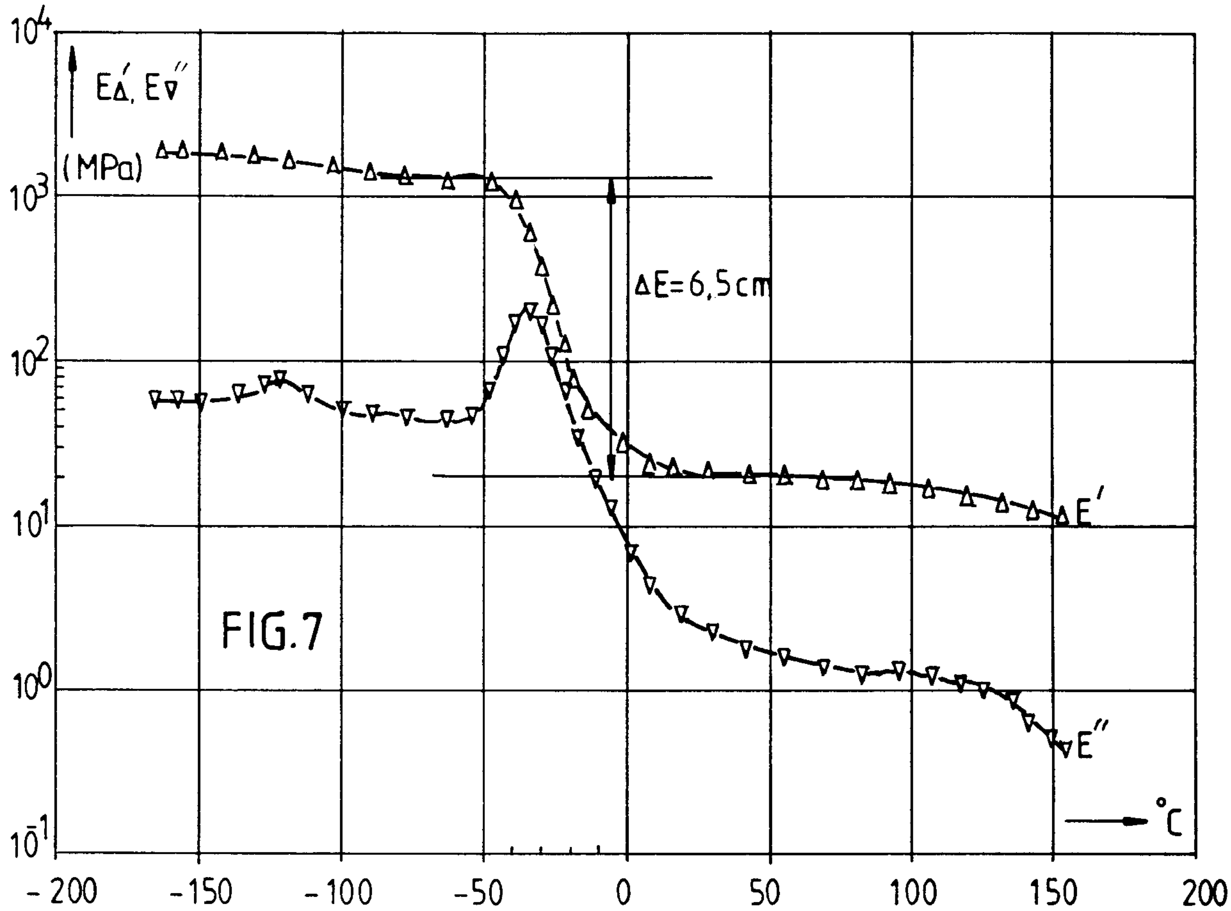
E'Δ, E''∇
(MPa)
10^4
10^3
10^2
10^1
10^0
10^-1
ΔE=6,5cm
E'
E''
°C
-200
-150
-100
-50
0
50
100
150
200

FIG.7

Europäisches Patentamt

# EUROPÄISCHER RECHERCHENBERICHT

Nummer der Anmeldung

EP 91113489.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| D,A | ULLMANNS'S ENCYKLOPÄDIE DER TECHNISCHEN CHEMIE, 4. Auflage 1976, Band 11 Verlag Chemie, Weinheim/Bergstraße Seiten 313-317 | 1-6 | C 08 L 75/04<br>D 01 F 6/70 |
| A | DE - A - 3 641 703 (BAYER AG) * Beispiele; Ansprüche * | 1-6 | |
| D,A | DE - A - 3 742 180 (BAYER AG) * Seite 4, Zeilen 4-13; Ansprüche * | 1-4 | |
| D,A | DE - A - 2 910 168 (BAYER AG) * Ansprüche * | 1-4 | |

RECHERCHIERTE SACHGEBIETE (Int Cl 5)

C 08 L 51/00
C 08 L 75/00
D 01 F

Der vorliegende Recherchenbericht wurde für alle Patentansprüche erstellt.

| Recherchenort | Abschlußdatum der Recherche | Prüfer |
|---|---|---|
| WIEN | 09-12-1991 | TENGLER |

KATEGORIE DER GENANNTEN DOKUMENTEN
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument

EPA Form 1503 03 82